# EUROPEAN PATENT APPLICATION

(11) **EP 0 568 298 A1**
(43) Date of publication of application: **03.11.1993**
(21) Application number: 93303243.5
(22) Date of filing: 26.04.1993
(51) Int. Cl.: G11B 33/04

(54) **A container for a compact disc, a minidisc, a cassette or a compact cassette**

(30) Priority: 30.04.1992 GB 9209338; 16.12.1992 GB 9226183
(71) Applicant: Hersey-Walker, John, Chislehurst, Kent, BR7 5LD (GB)
(72) Inventor: Hersey-Walker, John, Chislehurst, Kent, BR7 5LD (GB)
(74) Representative: Jones, Graham H.

(57) **Abstract**

A container (2) for a compact disc, a minidisc, a cassette or a compact cassette, which container (2) comprises a body portion (12) for receiving the compact disc, minidisc, cassette or compact cassette, a cover (8) which pivots about one side of the body portion (12) between open and closed positions, and fastener means (32) for releaseably fastening the cover (8) to the body portion (12), the body portion (12) being such that it comprises a walled member (12) which defines a recess and which is secured to the base member (20), the cover (8) and the base member (20) being formed from the same sheet of material, and the sheet of material being provided with at least one fold line (22, 24) which forms a hinge about which the cover (8) pivots between its open and closed positions.

## Description

This invention relates to a container for a compact disc, a minidisc, a cassette or a compact cassette.

Compact discs are rapidly increasing in popularity and containers for the compact discs need to be developed. Recent trends are towards containers which offer the compact disc some protection and one such known container comprises a body portion for receiving the compact disc, and a cover which pivots about one side of the body portion between open and closed positions. The body portion comprises a moulded member having a circular recess for receiving the compact disc. The moulded member is stuck to a base member. The cover and the base member are both formed from the same sheet of material and the sheet of material is provided with two fold lines which form a hinge about which the cover pivots between its open and closed positions. This known container is not entirely satisfactory in that the moulded member with its circular recess is of such a shape that it does not permit the provision of an information inlay or an information booklet underneath the compact disc. Also, because the cover and the base member are both formed from the same sheet of material, the cover tends to spring open which can then enable the contents of the container to fall out.

It is an aim of the present invention to obviate or reduce the problems associated with the known container for a compact disc, whilst at the same time enabling the container also to be used for receiving a minidisc, a cassette or a compact cassette.

Accordingly, in one non-limiting embodiment of the present invention there is provided a container for a compact disc, a minidisc, a cassette or a compact cassette, which container comprises a body portion for receiving the compact disc, minidisc, cassette or compact cassette, a cover which pivots about one side of the body portion between open and closed positions, and fastener means for releaseably fastening the cover to the body portion when the cover is in its closed position, the body portion being such that it comprises a walled member which defines a recess and which is secured to a base member, the cover and the base member both being formed from the same sheet of material, and the sheet of material being provided with at least one fold line which forms a hinge about which the cover pivots between its open and closed positions.

The walled member will be of an appropriate type to receive the compact disc, minidisc, cassette or compact cassette. Obviously, if the container is just to receive compact discs or minidiscs only, then the height of the walled member will normally be less than if the container is to receive a cassette or a compact cassette only. The height of the walled member will usually be chosen such that in addition to the compact disc, minidisc, cassette or compact cassette which it is to contain, it will also be able to contain an information inlay or an information booklet. The inlay and the booklet can be square or rectangular to fit in the rectilinear recess which can then be similarly shaped if desired. The use of the fastener means is helpful in stopping any inlay or booklet falling out of the container. This is especially advantageous where the container is manufactured as a separate item and is then shipped with the inlay or booklet in position to another manufacturer for packing with the compact disc, minidisc, cassette or compact cassette. The cassettes are normal cassettes as currently available and the compact cassettes are those devices which are just appearing on the market and which are ultimately intended to replace normal cassettes, in the same way as the compact disc has substantially replaced normal record discs. The minidisc is new to the market. One company producing minidiscs is Sony.

At shops, stores and other points of sale, the container will usually be displayed without its compact disc, minidisc, cassette or compact cassette in order to avoid theft problems. Here again, the presence of the fastener means is advantageous in helping to avoid any inlay or booklet falling out of the container or being stolen from the container. Furthermore, with the cover firmly closed and not tending to spring open, the containers can more easily be mounted on shelves or racks for display purposes.

Preferably, the walled member is a tray member having a base and straight side walls which upstand from the base to define a rectilinear recess for receiving the compact disc, minidisc, cassette or compact cassette. The tray member is preferably a moulded plastics tray member. Any suitable and appropriate plastics material may be employed.

The tray member is preferably secured to the base member by being stuck to the base member. Other methods of fixing the tray member to the base member may be employed. As an alternative to having a tray member, the walled member could just comprise the side walls without the base, in which case the side walls would be secured to the base member.

The sheet of material from which the cover and the base member are formed is preferably a sheet of card. Other materials including plastics materials may however be employed. Usually, the sheet of material will be such that it can easily be printed, for example with the words of a song and/or information about a recording artist.

Preferably, the sheet of material has two of the fold lines forming the hinge about which the cover pivots between its open and closed positions.

Preferably, the fastener means is provided on the body portion. The fastener means may however alternatively or in addition be provided on the cover.

Preferably the fastener means is formed as a movable part of a wall of the walled member.

Advantageously, the walled member has an upper peripheral lip which receives the cover when the cover is in its closed position. Thus the upper peripheral lip is able to protect the otherwise exposed peripheral edges of the cover. The upper peripheral lip also masks these peripheral edges of the cover from view so that the entire container then looks better.

The walled member may have a lower peripheral lip which receives the base member. Again, the lower peripheral lip may protect the otherwise exposed peripheral edges of the base member, and also masks the peripheral edges of the base member from view so that the entire container looks better.

The container may be one in which the walled member is a rectangular walled member with one of its shortest sides being adjacent the fold line which forms the hinge, and the other of its shortest sides being provided with the fastener means. Such a construction enables the container to be very compactly formed and to ensure that the container fits within the space available for the currently known container. Advantageously, the longest sides of the walled member are each provided with a recess for receiving a peripheral part of a compact disc or minidisc when a compact disc or minidisc is to be placed in the container, whereby the body portion of the container is only slightly larger than the compact disc or minidisc which it is to contain.

The container may be one in which the cover has a body portion for receiving literature, for example a book or a leaflet. Alternatively, the container may be one in which the cover has one of the body portions for receiving another compact disc, minidisc, cassette or compact cassette.

The present invention also extends to the container when including the compact disc, minidisc, cassette or compact cassette.

Embodiments of the invention will now be described solely by way of example and with reference to the accompanying drawings in which:
Figure 1 is a plan view of a known container in an open condition;
Figure 2 is a section on the line C-D shown in Figure 1;
Figure 3 is a side view of the container shown in Figure 1 in its closed condition;
Figure 4 is a section on the line A-Bshown in Figure 1;
Figure 5 is a section on the line E-F shown in Figure 1;
Figure 6 is a perspective view of a first container in accordance with the present invention, the container being shown in an open condition;
Figure 7 is a plan view of the container shown in Figure 6;
Figure 8 is a section on the line C-D shown in Figure 7;
Figure 9 is a side view of the container as shown in Figure 7 in its closed condition;
Figure 10 is a section on the line A-B shown in Figure 7;
Figure 11 is a section on the line E-F shown in Figure 7;
Figure 12 is a plan view of a second container in accordance with the present invention, the container being shown in an open condition;
Figure 13 is a side view on the line C-D shown in Figure 12;
Figure 14 is a side view of the container shown in Figure 12 but in a closed condition;
Figure 15 is a section on the line A-B shown in Figure 12;
Figure 16 is a section on the line E-F shown in Figure 12;
Figures 17, 18 and 19 show different types of cover for a container for a compact disc;
Figure 20 shows a different type of cover for a container for a cassette or a compact cassette;
Figure 21 is a plan view of a part of a third container in accordance with the present invention, the container being shown in an open condition;
Figure 22 is a view from inside the third container and is on arrow A shown in Figure 21;
Figure 23 is a view from inside the third container and is on arrow B shown in Figure 21;
Figure 24 is an end view on arrow C shown in Figure 21, the container being shown in a closed condition;
Figure 25 is a plan view of part of a fourth container in accordance with the present invention, the container being shown in an open condition;
Figure 26 is a view from inside the fourth container and is on arrow A shown in Figure 25;
Figure 27 is a view from inside the fourth container and is on arrow B shown in Figure 25;
Figure 28 is an end view on arrow C shown in Figure 25, the container being shown in a closed condition;
Figure 29 shows a fifth container in accordance with the present invention, the container being shown in an open condition;
Figure 30 is a view from inside the left hand part of the container as shown in Figure 29 and is on arrow A shown in Figure 29;
Figure 31 is a view from inside the right hand part of the container shown in Figure 29 and is on arrow B shown in Figure 29;
Figure 32 shows the fifth container on arrow C shown in Figure 29, the container being shown in a nearly closed condition;
Figure 33 is a plan view of a sixth container in accordance with the present invention, the container being shown in an open condition;
Figure 34 is a view from inside the left hand part of the sixth container and is on arrow A shown in Figure 33;
Figure 35 is a view from inside the right hand part of the sixth container and is on arrow B shown in Figure 33; and
Figure 36 is a view on arrow C shown in Figure 33, the container being shown in a nearly closed condition.

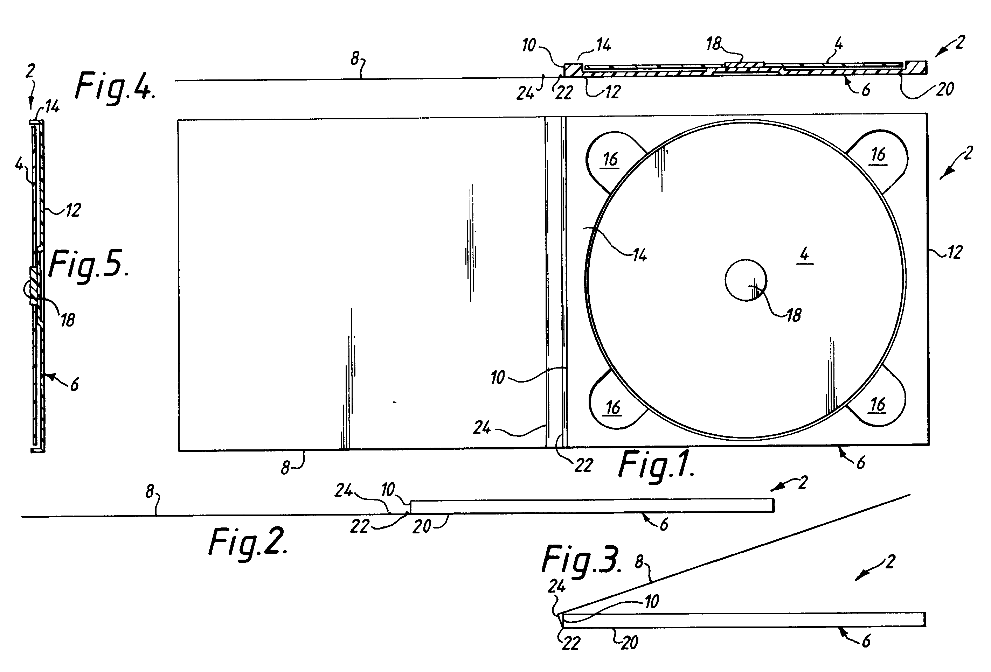

Referring to Figures 1 to 5, there is shown a known container 2 for a compact disc 4. The container 2 comprises a body portion 6 for receiving the compact disc 4, and a cover 8 which pivots about one side 10 of the body portion 6 between open and closed positions.

The body portion 6 comprises a moulded tray 12 having a circular wall 14 which receives the compact disc 4 as a fairly close fit. The moulded tray 4 is provided with four finger recesses 16 for facilitating removal of the compact disc 4. The moulded tray has upstanding fingers 18 (only shown schematically in Figures 1 and 5) and these upstanding fingers 18 form a disc holder portion for passing through a central aperture in the compact disc 4 and thus retaining the compact disc 4 in the moulded tray 12.

The moulded tray 12 is stuck to a base member 20. As can best be seen from Figure 2, the cover 8 and the base member 20 are both formed from the same sheet of material. This sheet of material is thin card and it is provided with two fold lines 22, 24. These fold lines may be formed as creases and they form a hinge about which the cover 8 pivots between its open and closed positions.

The container 2 shown in Figures 1 to 5 is not entirely satisfactory in that the circular wall 14 defines a circular recess. Because the recess 14 is circular, it cannot receive an information inlay or booklet since the inlays and booklets are straight sided in order to enable them to contain the maximum information in an easily readible layout. Thus the known container 2 does not contain an inlay or a booklet and the depth of the circular wall 14 is not sufficient to receive both the compact disc 4 and a booklet.

The container 2 shown in Figures 1 to 5 is also not entirely satisfactory in that, as can be seen from Figure 3, the cover 8 tends to spring open when it is in its closed position. This is due to the natural resilience of the card material from which the cover 8 and the base member 20 are made. The container 2 is usually made by a container manufacturer who then ships the containers to a recording manufacturer who then inserts the compact discs. If any inlays or booklets were to be inserted in the known container by the container manufacturer, then these would be likely to fall out in transit to the recording manufacturer, or during insertion of the compact discs. Similarly, when the known container 2 is displayed on a shelf or a rack in a shop or other retail point, the compact disc 2 is usually removed to avoid it being stolen but, with the cover 8 tending automatically to come open, any inlay or booklet placed in the container 2 could either be removed or, more likely, simply to fall out as the container 2 is being handled by the buying public.

The container 2 shown in Figures 1 to 5 is also not entirely satisfactory in that the moulded tray 12 is stuck on to the base member 20 such that the edges of the moulded tray 12 are level with the base member 20. When the cover 8 is closed, the edges of the cover 8 are also level with the edges of the moulded tray 12. Thus the edges of the cover 8 and the base member 20 are unprotected and during transport, storage and handling, these unprotected edges may become damaged. Also, the unprotected edges do not look particularly neat.

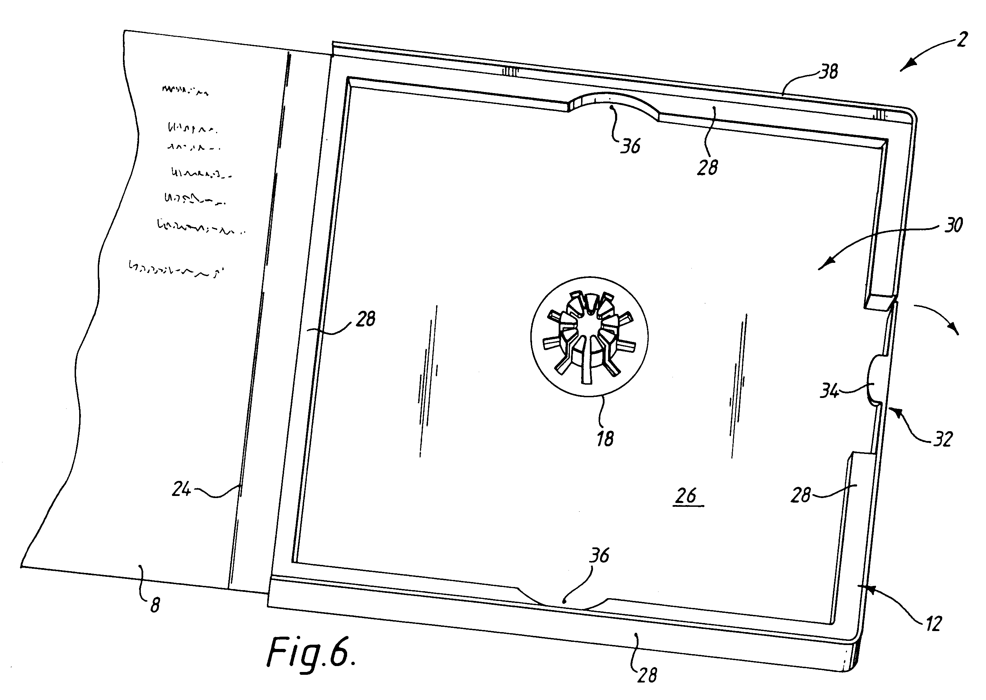

Referring now to Figures 6 to 11, there is shown a container 2 in accordance with the present invention. The container 2 is for receiving a compact disc 4 and similar parts as in Figures 1 to 5 have been given the same reference numerals for ease of comparison and understanding.

In the container 2 shown in Figures 6 to 11, it will be seen that the container 2 has a walled member in the form of a moulded tray 12 but the moulded tray 12 is not like the moulded tray 12 shown in Figures 1 to 5. In the container 2 of the present invention, the moulded tray 12 has a base 26 and straight side walls 28. The side walls 28 form a rectangular recess 30 for receiving a straight sided information inlay or booklet (not shown).

As shown in Figures 6 to 11, one of the shortest side walls 28 is adjacent the fold lines 22, 24 which form the hinge, and the other of the short side walls 28 is provided with fastening means in the form of a clasp 32. The clasp 32 is formed as an outwardly movable portion of its side wall 28, the clasp tending to be biased inwardly so that a top lip portion 34 is available for clipping over the top of the cover 8 when the cover 8 is in its closed position. The clasp 32 enables the container 2 to have its cover 8 fully closed when desired so that the contents of the container 2 cannot inadvertently fall out.

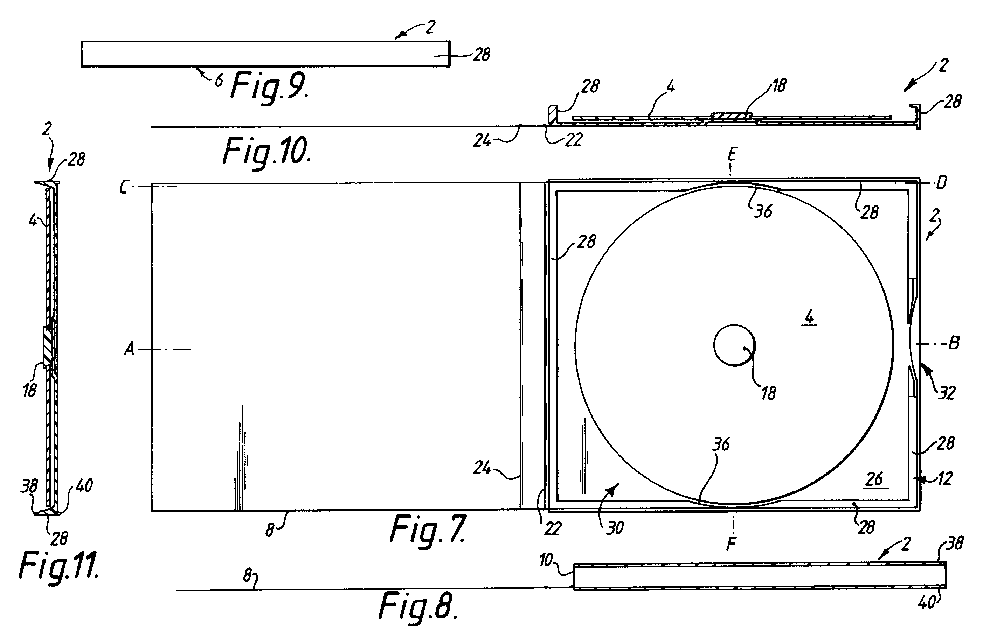

As can be seen from Figures 6 and 7, the two longest side walls 28 of the container 2 are each provided with a recessed portion 36. This is for receiving the periphery of the compact disc 4 as shown in Figure 7. The recessed portions 36 are employed because the recess 30 is slightly rectangular. The construction employed enables the container 2 to be very compact and to fit into the available space normally made available for known containers 2 for compact discs.

Although the container 2 shown in Figures 6 to 11 is such that the cover 8 and the base member 20 are formed from the same sheet of material, the peripheral edges of the cover 8 and the base member 20 are protected and hidden. More specifically, the moulded tray 12 has an upper peripheral lip 38 which is best shown in Figures 6, 8 and 11. This upper peripheral lip receives the cover 8 when the cover 8 is in its closed position. Thus the upper peripheral lip 38 protects the edges of the cover and stops them becoming turned up due to being knocked during transport or use. Still further, the upper peripheral lip 38 masks the peripheral edges of the cover 8 and so the entire container 2 looks neater in its closed position as shown in Figure 9.

The moulded tray 12 is such that the side walls 28 also have a lower peripheral lip 40 as can best be seen from Figures 8 and 11. The lower peripheral lip 40 receives the base member 20. Thus the peripheral edges of the base member 20 are prevented from being knocked and turned up during storage or use. Also, the peripheral edges of the base member 20 are masked from view so that the container 2 looks neater than it would otherwise do if the peripheral edges of the base member 20 were visible.

For simplicity of illustration, the fingers 18 have only been shown in detail in Figure 6.

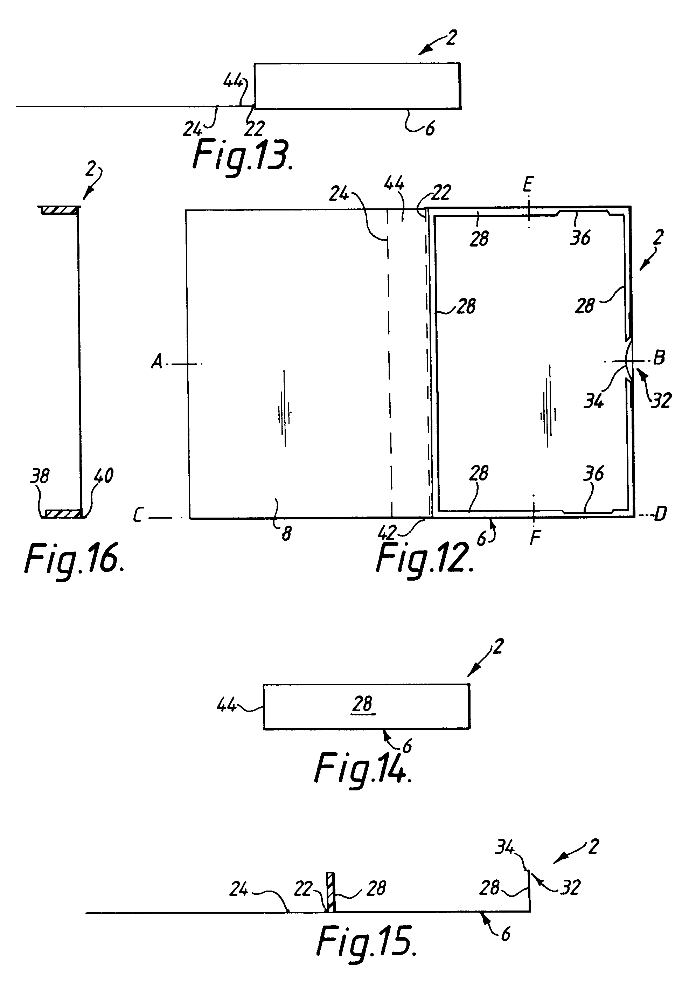

Referring now to Figures 12 to 16, there is shown another container 2 in accordance with the invention. Similar parts as in Figures 6 to 11 have been given the same reference numerals for ease of comparison and understanding. The container 2 shown in Figures 12 to 16 is for a cassette or a compact cassette such for example as a digital compact cassette. The fingers 18 has thus been omitted and the side walls 28 are deeper to receive the cassette or the compact cassette. Otherwise, the container 2 shown in Figures 12 to 16 is constructed to be generally the same as the container 2 shown in Figures 6 to 11.

As shown in Figure 12, the recesses 36 are shaped differently than the recesses 36 shown in Figure 6, the recesses 36 shown in Figure 12 being to allow a standard cassette to fit into the body portion 6.

As shown in Figure 13, the body portion 6 is provided with a rear protective lip 42, which lips hold the spine 44 of the container 2 which is formed as the cover 8 extends over the body portion 6 to its closed position as shown in Figure 14.

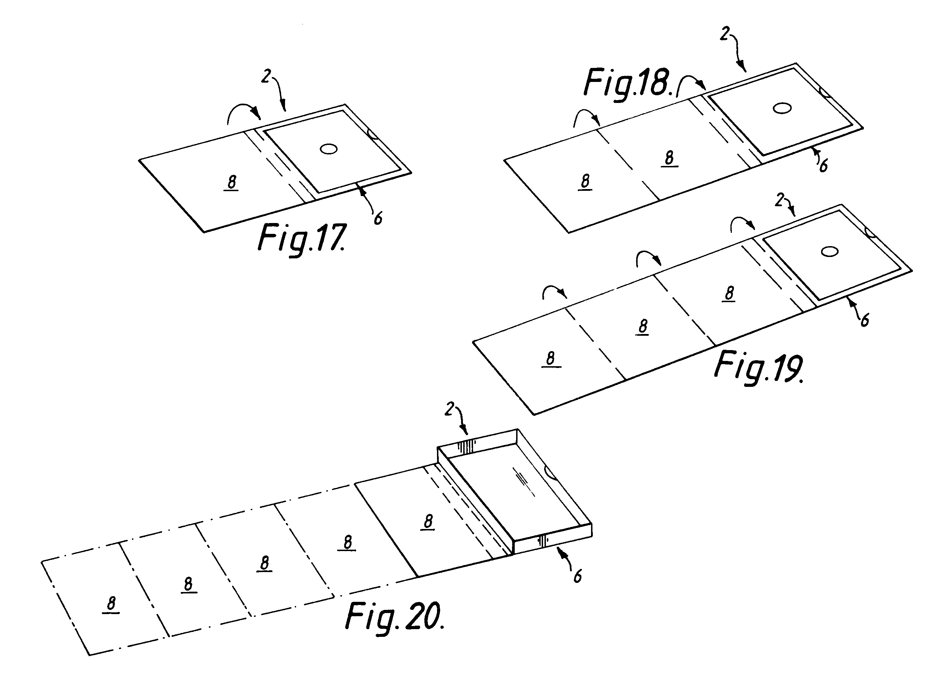

Figure 17 is a somewhat schematic view of the container 2 shown in Figures 6 to 11. It will be seen that the container 2 has a cover 8 formed generally by a one fold finish. Figure 18 shows a container 2 similar to that shown in Figure 18 but formed with a two fold finish. Figure 19 shows a container 2 similar to that shown in Figure 17 but formed with a three fold finish. More folds may be employed if desired.

Figure 19 shows somewhat schematically the container 2 shown in Figures 12 to 16 and illustrates by the dotted lines how the container 2 may have one or more folds.

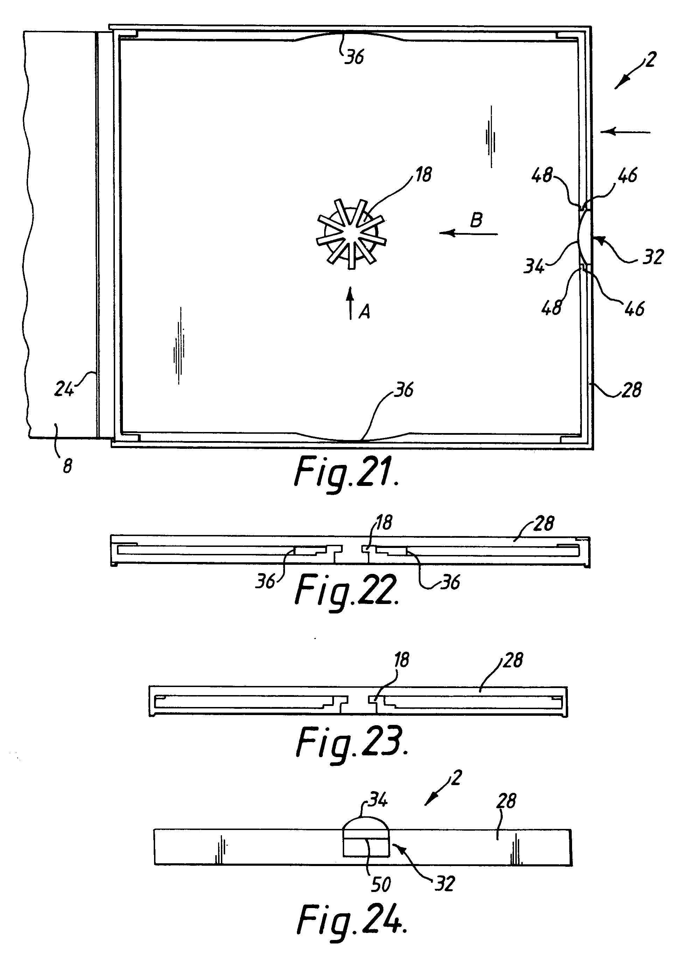

Figures 21 - 24 show a third container which is like the first container shown in Figures 6 - 11. The main difference between the first and the third containers 2 is that the third container 2 shown in Figures 21 - 24 has a separately formed clasp 32. The clasp 32 has side lugs 46 which slide in complementary slots 48 in the side wall 28. The top lip portion 34 hinges open about a hinge 50 formed as a line of weakness in the clasp 32. This line of weakness can easily be formed during moulding of the clasp 32.

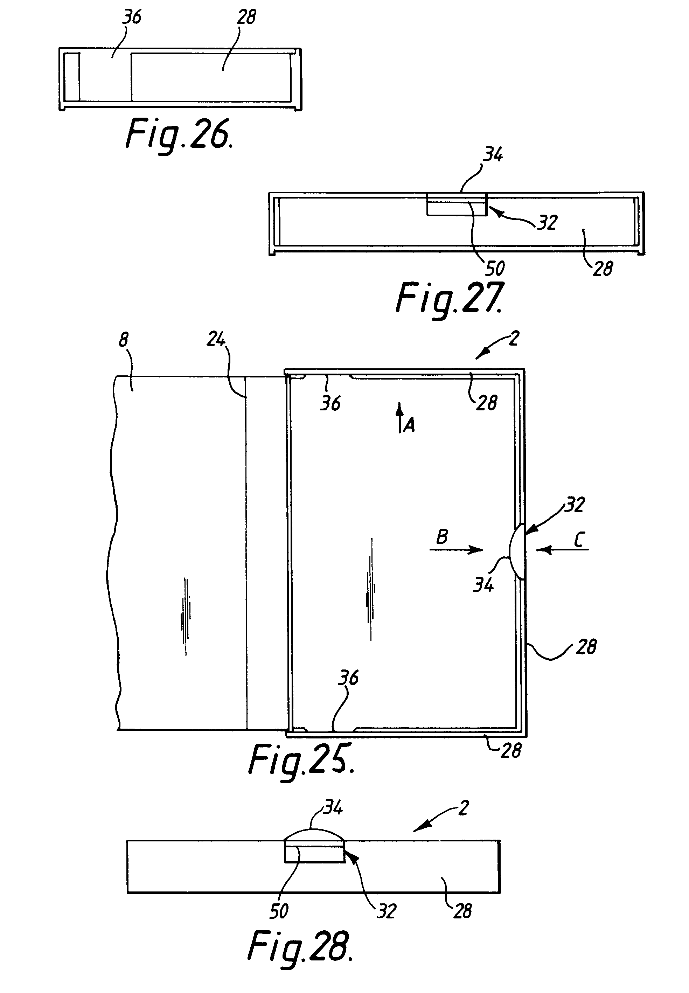

Figures 25 - 28 show a fourth container 2 which is like the second container shown in Figures 12 - 16. The main difference in the fourth container 2 is that the clasp 32 is like the clasp 32 shown in Figures 21 - 24.

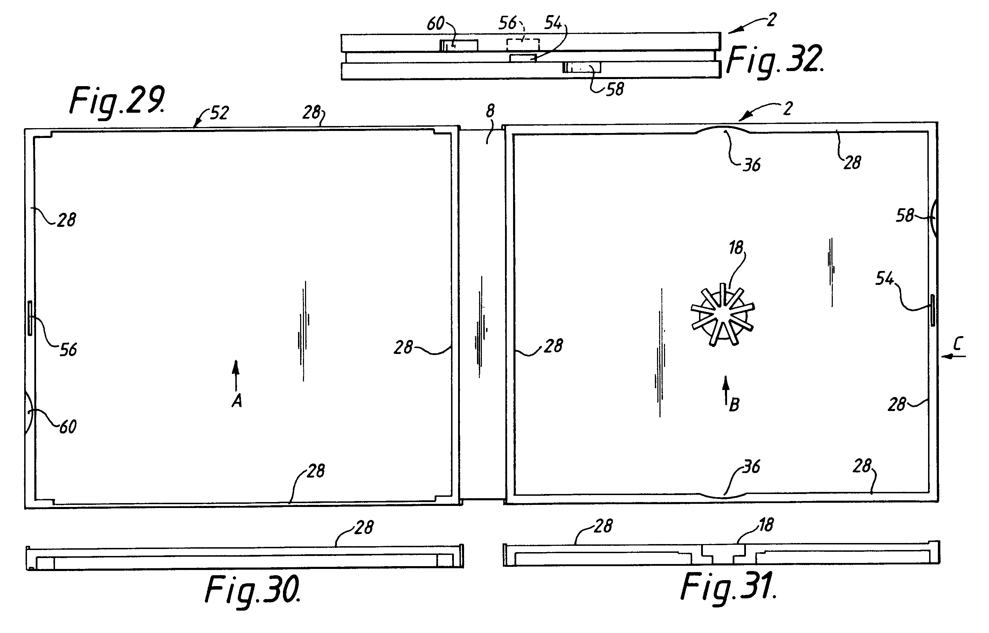

Figures 29 - 32 show a fifth container 2 which is similar to the first container 2 shown in Figures 6 - 11. The main difference in the fifth container 2 is that the cover 8 has a moulded tray 52 which is like the moulded tray 12 but without the upstanding fingers 18. The moulded tray 52 is for receiving literature such for example as a book, leaflet or photographs.

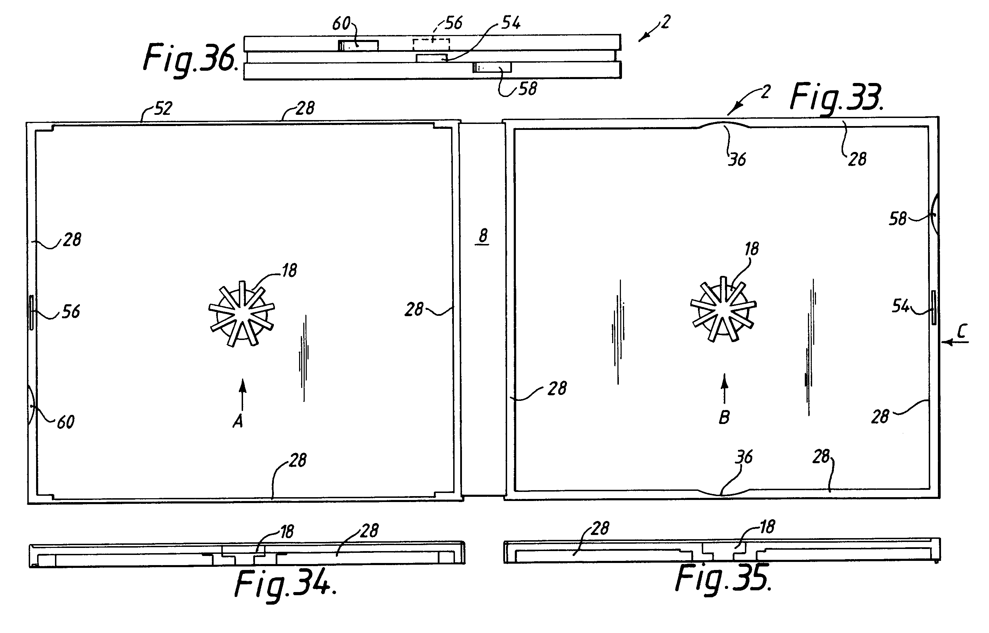

The container 2 shown in Figures 29 - 32 also has a different type of fastening means to the clasp 32. In Figures 29 - 32, the fastening means is a catch which comprises an upstanding lug 54 which is received into a complementary slot 56 when the container 2 is closed. In order to open the container 2, a pair of finger recesses 58, 60 are provided as shown. Figure 32 shows the container 2 just prior to being completely closed with the lug 54 about to enter the slot 56.

The sixth container shown in Figures 33 - 36 is similar to the fifth container shown in Figures 29 - 32 except that the sixth container has the tray 52 provided with fingers 18 so that the container 2 is then suitable for receiving two compact discs.

It is to be appreciated that the embodiments of the invention described above with reference to the accompanying drawings have been given by way of example only and that modifications may be effected. Thus, for example, the container shown in Figures 6 to 11, 17 to 19, 21 to 23, 29 to 32 and 33 to 36 may be used to contain a minidisc rather than a compact disc. The walled member may define any suitably shaped recess, for example a square, rectangular or other rectilinearly shaped recess. If the container is made such that it does not have any fingers 18, then the container of the invention may just contain one or more books, leaflets or other literature. The information on the compact disc, minidisc, cassette or compact cassette may be any information for giving sound and/or pictures.

## Claims

1. A container for a compact disc, a minidisc, a cassette or a compact cassette, which container comprises a body portion for receiving the compact disc, minidisc, cassette or compact cassette, a cover which pivots about one side of the body portion between open and closed positions, and fastener means for releaseably fastening the cover to the body portion when the cover is in its closed position, the body portion being such that it comprises a walled member which defines a
recess and which is secured to a base member, the cover and the base member both being formed from the same sheet of material, and the sheet of material being provided with at least one fold line which forms a hinge about which the cover pivots between its open and closed positions.

2. A container according to claim 1 in which the walled member is a tray having a base and straight side walls which upstand from the base to define a
rectilinear recess for receiving the compact disc, minidisc, cassette or compact cassette.

3. A container according to claim 2 in which the tray member is a moulded plastics tray member, and in which the tray member is secured to the base member by being stuck to the base member.

4. A container according to any one of the preceding claims in which the sheet of material from which the cover and the base member are formed is a sheet of card.

5. A container according to any one of the preceding claims in which the sheet of material from which the cover and the base member are formed has two of the fold lines forming the hinge about which the cover pivots between its open and closed positions.

6. A container according to any one of the preceding claims in which the fastener means is provided on at least one of the body portion and the cover.

7. A container according to any one of the preceding claims in which the walled member has an upper peripheral lip which receives the cover when the cover is in its closed position.

8. A container according to any one of the preceding claims in which the walled member has a lower peripheral lip which receives the base member.

9. A container according to any one of the preceding claims in which the cover has a body portion for receiving literature.

10. A container according to any one of claims 1 to 8 in which the cover has one of the body portions for receiving another compact disc, minidisc, cassette or compact cassette.

11. A container according to any one of the preceding claims when including the compact disc, minidisc, cassette or compact cassette
